# FASCICULE DE BREVET EUROPEEN

(11) **EP 2 699 452 B1**
(45) Date de publication et mention de la délivrance du brevet: **01.04.2020**
(21) Numéro de dépôt: 12718297.0
(22) Date de dépôt: 04.04.2012
(51) Int. Cl.: B60Q 1/44, B60Q 11/00, B60T 7/04, B60T 17/22, B60W 50/02, B60T 8/88

(54) **PROCÉDÉ ET SYSTÈME DE COMMANDE DE L'ALLUMAGE DE FEUX DE STOP D'UN VÉHICULE AUTOMOBILE, ET VÉHICULE ÉQUIPÉ D'UN TEL SYSTÈME**
VERFAHREN UND SYSTEM ZUR STEUERUNG DES EINSCHALTENS VON BREMSLEUCHTEN EINES FAHRZEUGS UND FAHRZEUG MIT EINEM SOLCHEN SYSTEM.
METHOD AND SYSTEM FOR CONTROLLING THE STOP LIGHTS OF A MOTOR VEHICLE, AND VEHICLE WITH SUCH A SYSTEM

(30) Priorité: 19.04.2011 FR 1153366
(43) Date de publication de la demande: 26.02.2014
(73) Titulaire: Renault S.A.S., 92100 Boulogne-Billancourt (FR)
(72) Inventeur: MAHE, Michel, F-78280 Guyancourt (FR)
(74) Mandataire: Rougemont, Bernard
(86) Numéro de dépôt international: PCT/FR2012/050725
(87) Numéro de publication internationale: WO 2012/143640

(56) Documents cités:
- WO-A1-98/36956
- DE-A1- 4 319 833
- DE-A1- 19 826 132
- DE-A1- 19 841 335
- FR-A1- 2 914 604
- US-B1- 6 345 225

## Description

### Domaine technique de l'invention

L'invention concerne le domaine de l'allumage de feux de stop d'un véhicule automobile.

L'invention a pour objet plus particulièrement de proposer un procédé et un système de commande de l'allumage, mettant en œuvre un premier dispositif de contrôle électronique qui est apte à réaliser l'acquisition et le traitement d'un premier signal d'entrée représentatif d'une sollicitation mécanique sur une pédale d'actionnement d'un dispositif de freinage du véhicule. L'allumage des feux de stop est commandé par le premier dispositif de contrôle dans le cas où le traitement du signal d'entrée aboutit à un résultat correspondant à une confirmation d'une sollicitation mécanique de la pédale.

### État de la technique

Il est connu de prévoir des moyens pour détecter une sollicitation mécanique sur une pédale d'actionnement du dispositif de freinage d'un véhicule automobile. Ces moyens de détection sont conçus pour délivrer au moins un signal d'entrée représentatif de la présence et de l'absence, éventuellement de la valeur progressive de la sollicitation mécanique, et pour transmettre ce signal ainsi généré à un premier dispositif de contrôle électronique ayant pour rôle de traiter cette information d'entrée. Généralement, le premier dispositif de contrôle électronique, par exemple pourvu d'un microcontrôleur permettant d'intégrer au moins un logiciel de gestion des tâches programmable, a pour vocation ultérieure de commander l'allumage des feux de stop par l'intermédiaire d'un réseau d'informations multiplexé en fonction du signal d'entrée.

Le document US-B1-6345225 décrit un système de freinage électromécanique comprenant une pédale avec un capteur redondant et une unité de contrôle pouvant détecter une défaillance d'un des capteurs de la pédale. Une deuxième unité de contrôle déclenche l'allumage des feux stop. Les unités de contrôle et le module de la pédale sont reliés par un réseau multiplexé.

Le document US-B2-7328092 décrit une solution de gestion complexe où le premier dispositif de contrôle électronique transmet l'information de la sollicitation mécanique de la pédale d'actionnement du dispositif de freinage à un deuxième dispositif de contrôle électronique remplissant des fonctions dont l'allumage des feux de stop. En particulier, ce document divulgue une gestion électronique du véhicule où au moins un signal d'entrée relatif au freinage est exploité par un deuxième dispositif de contrôle électronique pilotant la chaîne de traction du véhicule, i.e. les microcontrôleurs de commande et de régulation de la motorisation et/ou de la boite de vitesse du véhicule. Ce signal peut également être utilisé à des fins de contrôle de défauts éventuels dans la chaîne de freinage.

Le document US-B2-6573830 décrit une solution pour commander un allumage progressif du troisième feu de stop d'un véhicule automobile en fonction de la valeur de la sollicitation mécanique de la pédale d'actionnement du dispositif de freinage. Ce feu est par exemple équipé d'un ensemble de LEDs (correspondant à « light emitting diodes » en terminologie anglo-saxonne) individuelles, le nombre de LEDs allumées simultanément étant fonction de la course ou de l'effort de sollicitation de la pédale. Le pilotage de l'allumage des LEDs est réalisé par un dispositif de contrôle électronique comprenant par exemple un microcontrôleur géré par un programme. Ce dispositif de contrôle peut recevoir en outre un signal d'entrée binaire représentatif de la présence ou de l'absence de sollicitation mécanique sur la pédale. Dans ce cas, il peut être prévu que l'analyse de la course ou de l'effort de sollicitation de la pédale ne soit exécutée par le dispositif de contrôle qu'après la réception par celui-ci d'un signal d'entrée positif représentatif de la présence d'une sollicitation de la pédale. Certains paramètres complémentaires tels que la valeur maximale de sollicitation de la pédale peuvent être enregistrés dans le dispositif de contrôle dans des mémoires non volatiles pour réaliser une surveillance d'éventuelles défaillances.

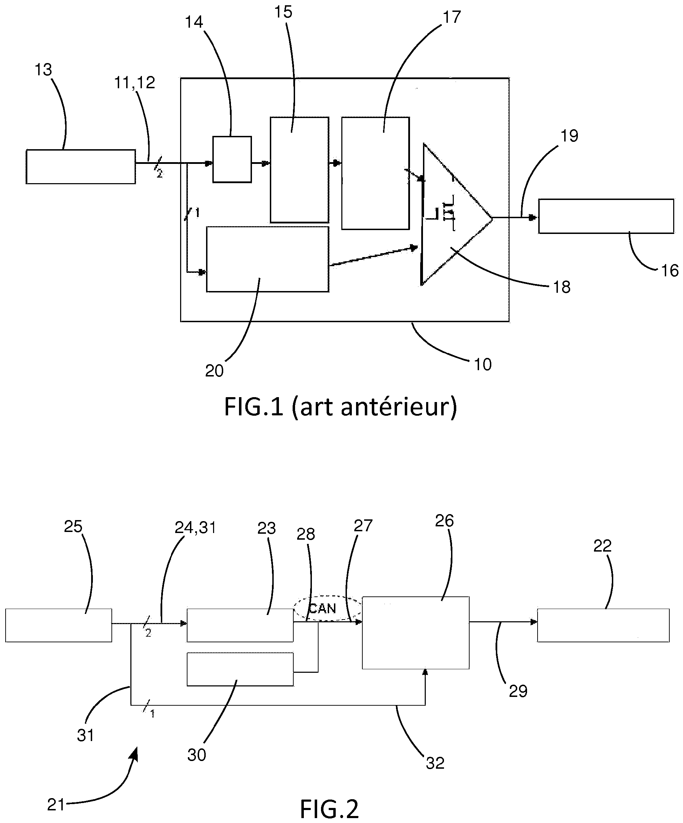

Par ailleurs, des autorités administratives concernées par le domaine ont édité une réglementation obligeant, à partir de l'année 2013, à commander l'allumage des feux de stop au moyen d'une régulation de la tension électrique appliquée à leurs bornes. La figure 1 illustre une solution connue de l'art antérieur qui permet de parvenir à ce résultat.

Sur cette figure, un dispositif de contrôle électronique 10 constitué par le BCM du véhicule (qui est l'organe de contrôle électrique général du véhicule, signifiant « Body Control Module » en terminologie anglo-saxonne, et qui intègre la partie logiciel fonctionnelle de l'essentiel des fonctions du véhicule), reçoit des premier et deuxième signaux d'entrée 11, 12 en provenance d'une pédale d'actionnement 13 d'un dispositif de freinage du véhicule. Les signaux 11, 12 sont indépendants l'un de l'autre mais traduisent chacun individuellement la présence ou inversement l'absence de sollicitation mécanique sur la pédale 13. Par exemple, le premier signal d'entrée 11 provient d'un interrupteur normalement ouvert en position de repos, dont la fermeture traduit la présence d'une sollicitation mécanique sur la pédale 13, tandis que le deuxième signal d'entrée 12 peut être émis par un interrupteur normalement fermé en position de repos, dont l'ouverture correspond à la présence d'une sollicitation mécanique sur la pédale 13. Un module d'acquisition 14 du dispositif de contrôle 10 réalise l'acquisition d'au moins l'un des signaux 11, 12 et transmet ces informations vers un module de traitement 15 (par exemple un microcontrôleur) qui, en fonction du résultat de ce traitement, commande l'allumage des feux de stop 16 par l'intermédiaire d'un module de pilotage 17 qui réalise une régulation de la tension électrique par exemple moyenne appliquée aux bornes des feux de stop 16. Un commutateur électronique 18 par exemple sur silicium (encore appelé « Smart Power » en terminologie anglo-saxonne) est interposé entre le module de pilotage 17 et les feux de stop 16. Le signal de sortie 19 émis par le commutateur électronique 18 est fonction de la régulation exécutée par le module de pilotage 17. Le module d'acquisition 14, le module de traitement 15, le module de pilotage 17 et le commutateur électronique 18 sont tous incorporés dans le dispositif de contrôle électronique 10 formé par le BCM, de sorte que le signal de sortie 19 transmis aux feux de stop 16 est finalement généré par le dispositif de contrôle électronique 10. Le commutateur électronique 18 évite le recours à un relais électromécanique et présente une vitesse de commutation très rapide (jusqu'à 200Hz) tout en permettant de diagnostiquer la sortie (présence d'un court-circuit, d'une ouverture du circuit ou d'une surcharge).

L'un des deux signaux d'entrée 11, 12 est également transmis directement au commutateur électronique 18 sans acquisition ou traitement par les modules 14 et 15, par l'intermédiaire d'une protection communément connue sous le nom de « chien de garde », repéré 20. Un chien de garde, encore connu sous la dénomination anglo-saxonne « watchdog », est un circuit électronique ou un logiciel utilisé dans le domaine de l'électronique numérique pour s'assurer qu'un automate, un microcontrôleur ou un ordinateur, ne reste pas bloqué à une étape particulière du traitement ou du processus qu'il exécute. Il réalise donc une protection destinée généralement à redémarrer le système, si une action définie n'est pas exécutée dans un délai imparti. Le chien de garde 20 est intégré dans le dispositif de contrôle électronique 10 et assure que le signal d'entrée 11, 12 qu'il reçoit puisse être transmis directement au commutateur électronique 18, qui doit changer d'état, puis in fine aux feux de stop 16, en cas de défaillance d'au moins l'un des modules d'acquisition 14, de traitement 15 ou de pilotage 17. Toutefois, dans ce mode dégradé, la régulation en tension électrique aux bornes des feux de stop 16 est interrompue.

Enfin, il est prévu que le module de traitement 15 puisse réaliser un diagnostic pour détecter d'éventuelles défaillances du/des contacteur(s) et des liaisons électriques, en cas de défaut d'acquisition de l'un des signaux d'entrée 11, 12. Une alerte est alors envoyée au conducteur, par l'intermédiaire d'un réseau d'informations multiplexé de type bus CAN (pour « Controller Area Network » en terminologie anglo-saxonne), au niveau d'une interface homme/machine aménagée par exemple à proximité du tableau de bord du véhicule.

Toutefois, cette solution où toutes les opérations relatives à la commande en allumage des feux de stop sont réalisées par le BCM du véhicule ne donne pas une totale satisfaction en pratique car la robustesse de la commande n'est pas complétement satisfaisante.

### Objet de l'invention

Le but de la présente invention est de remédier à ces inconvénients, en proposant une solution de commande de l'allumage de feux de stop d'un véhicule automobile qui améliore la robustesse de la commande tout en restant simple, efficace et peu onéreuse.

A cet effet, l'invention concerne un procédé de commande de l'allumage de feux de stop d'un véhicule tel que défini dans la revendication 1 et un système de commande de l'allumage des feux stops selon la revendication 10.

Avantageusement, les fonctions d'acquisition des signaux d'entrée provenant de la pédale d'actionnement, de traitement de ces signaux, et de pilotage des feux de stop sont réparties dans plusieurs dispositifs de contrôle électronique différents, ce qui améliore la robustesse de la commande en allumage des feux de stop. D'autre part, la fonction de pilotage qui impose une régulation de la tension électrique aux bornes des feux de stop peut être maintenue même en cas de défaillance au niveau de l'acquisition et/ou du traitement des signaux d'entrée. Ces avantages sont atteints tout en s'affranchissant de toute obligation de répéter plusieurs fois les opérations ou d'aménager des redondances superflues et onéreuses.

Le procédé comprend une deuxième étape d'acquisition, par le deuxième dispositif de contrôle électronique, d'un deuxième signal d'entrée représentatif d'une sollicitation mécanique sur la pédale d'actionnement, indépendant du premier signal d'entrée.

La deuxième étape d'acquisition du deuxième signal d'entrée par le deuxième dispositif de contrôle électronique et une phase d'acquisition de l'ordre d'allumage peuvent être réalisées par un module d'acquisition.

Le module d'acquisition peut réaliser une étape de diagnostic pour vérifier l'acquisition conjointe du deuxième signal d'entrée et de l'ordre d'allumage.

Le procédé peut comprendre une étape d'alerte du conducteur du véhicule dans le cas d'un résultat de l'étape de diagnostic correspondant à une absence d'acquisition du deuxième signal d'entrée et/ou de l'ordre d'allumage.

L'étape d'acquisition du deuxième signal d'entrée par le deuxième dispositif de contrôle électronique peut être réalisée par le commutateur électronique.

L'acquisition du deuxième signal d'entrée par le commutateur électronique peut être commandée par un « chien de garde » déclenché en cas d'absence d'acquisition de l'ordre d'allumage.

Le procédé peut comprendre une étape d'acquisition du deuxième signal d'entrée par le premier dispositif de contrôle électronique.

Un module d'acquisition du premier dispositif de contrôle électronique peut réaliser une étape de diagnostic pour vérifier l'acquisition conjointe des premier et deuxième signaux d'entrée.

Un deuxième aspect de l'invention concerne un système de commande. Ce système est remarquable en ce qu'il comprend un premier dispositif de contrôle électronique, apte à réaliser l'acquisition d'un premier signal d'entrée représentatif d'une sollicitation mécanique sur une pédale d'actionnement d'un dispositif de freinage du véhicule, et à transmettre un ordre d'allumage des feux de stop représentatif du premier signal d'entrée à un deuxième dispositif de contrôle électronique par un réseau d'informations multiplexé, le deuxième dispositif de contrôle électronique étant apte à émettre un signal de sortie pilotant l'allumage des feux de stop par l'intermédiaire d'une régulation de la tension électrique appliquée aux bornes des feux de stop en fonction de l'ordre d'allumage.

Le deuxième dispositif de contrôle électronique peut intégrer un commutateur électronique apte à commander l'émission du signal de sortie préalablement généré par un module de régulation du deuxième dispositif de contrôle électronique en fonction de l'ordre d'allumage acquis par un module d'acquisition du deuxième dispositif de contrôle électronique.

Le module d'acquisition et/ou le commutateur électronique du deuxième dispositif de contrôle électronique peut réaliser une acquisition d'un deuxième signal d'entrée représentatif d'une sollicitation mécanique sur la pédale d'actionnement.

Le système peut comprendre une interface apte à alerter le conducteur du véhicule en cas d'absence d'acquisition, par le module d'acquisition du deuxième dispositif de contrôle électronique, de l'ordre d'allumage et/ou du deuxième signal d'entrée.

Le deuxième dispositif de contrôle électronique peut intégrer un « chien de garde » apte à commander, après un déclenchement résultant de l'absence d'acquisition de l'ordre d'allumage par le module d'acquisition, l'acquisition du deuxième signal d'entrée par le commutateur électronique.

Le système peut comporter une connexion pour transmettre le deuxième signal d'entrée à un module d'acquisition du premier dispositif de contrôle électronique.

Un troisième aspect de l'invention concerne un véhicule automobile équipé d'un tel système de commande.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 illustre une commande de l'allumage des feux de stop selon l'art antérieur,
- la figure 2 est un diagramme de principe simplifié d'un exemple de commande selon l'invention,
- la figure 3 est un diagramme détaillant celui de la figure 2,
- la figure 4 est un diagramme détaillant une partie de celui illustré sur la figure 3.

### Description de modes préférentiels de l'invention

La figure 2 illustre schématiquement un exemple de système de commande 21 selon l'invention. Ce système de commande 21 de l'allumage de feux de stop 22 d'un véhicule automobile comprend un premier dispositif de contrôle électronique 23, apte à réaliser l'acquisition et le traitement d'un premier signal d'entrée 24, représentatif de la présence et de l'absence, éventuellement de la valeur progressive (course de déplacement ou effort appliqué), d'une sollicitation mécanique sur une pédale d'actionnement 25 d'un dispositif de freinage du véhicule. Le système 21, par exemple par l'intermédiaire du premier dispositif de contrôle 23, transmet un ordre d'allumage 28 des feux de stop 22 en fonction du premier signal d'entrée 24 à un deuxième dispositif de contrôle électronique 26 raccordé au premier 23 par un réseau d'informations multiplexé 27. Le deuxième dispositif de contrôle électronique 26 est apte à émettre un signal de sortie 29 pilotant l'allumage des feux de stop 22 en assurant une régulation de la tension électrique, par exemple moyenne, ou bien une régulation de la puissance, appliquée aux bornes des feux de stop 22 en fonction de l'ordre d'allumage 28.

Comme l'illustre la figure 2, l'ordre d'allumage 28 peut également être généré par un troisième dispositif de contrôle électronique 30 tel que l'assistance d'aide à la trajectoire du véhicule communément appelé ESP (pour « Electronic Stability Program » en terminologie anglo-saxonne).

Dans un mode de réalisation, le premier dispositif de contrôle électronique 23 est apte à réaliser l'acquisition et le traitement d'un deuxième signal d'entrée 31, représentatif de la présence et de l'absence, éventuellement de la valeur progressive (course de déplacement ou effort appliqué), d'une sollicitation mécanique sur la pédale d'actionnement 25, ce signal 31 étant indépendant du premier signal d'entrée 24.

Avantageusement, le premier dispositif de contrôle électronique 23 peut être constitué par le BCM du véhicule (qui est l'organe de contrôle électrique général du véhicule, signifiant « Body Control Module » en terminologie anglo-saxonne, et qui intègre la partie logiciel fonctionnelle de l'essentiel des fonctions du véhicule).

Par contre, le deuxième dispositif de contrôle électronique 26 peut être constitué par un calculateur appelé EMM (pour « Energy management module » en terminologie anglo-saxonne) réalisant la gestion en énergie de différents organes d'allumage du véhicule tels que les feux de stop 22 ou bien encore les feux de position et/ou les feux de route du véhicule.

Les premier et deuxième signaux d'entrée 24, 31 sont indépendants l'un de l'autre mais traduisent chacun individuellement la présence ou inversement l'absence, potentiellement la valeur progressive, d'une sollicitation mécanique sur la pédale 25. Par exemple, le premier signal d'entrée 24 provient d'un interrupteur normalement fermé en position de repos, dont l'ouverture traduit la présence d'une sollicitation mécanique sur la pédale 25, tandis que le deuxième signal d'entrée 31 est émis par un interrupteur normalement ouvert en position de repos, dont la fermeture correspond à la présence d'une sollicitation mécanique sur la pédale 25. Cette définition des premier et deuxième signaux d'entrée 24, 31 peut toutefois être inversée.

Seul le deuxième signal d'entrée 31 est également transmis directement au deuxième dispositif de contrôle 26, sans transiter par le premier dispositif de contrôle 23, par l'intermédiaire d'une liaison redondante 32. Dans le cas du troisième dispositif de contrôle électronique 30, une incohérence entre l'ordre transmis par celui-ci et la liaison redondante 32 est géré à l'aide d'un opérateur logique de type OU entre les deux informations.

Le réseau d'informations multiplexé 27 affecté au transfert de l'ordre de commande 28 vers le deuxième dispositif de contrôle 26 peut être de type bus CAN (pour « controller area network » en terminologie anglo-saxonne).

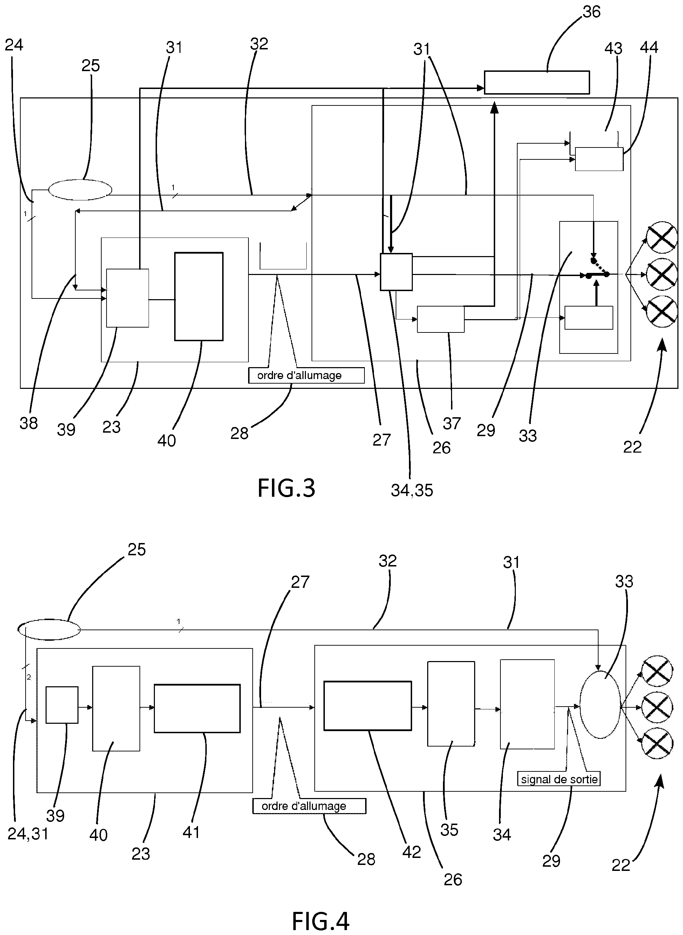

En référence à la figure 3, le deuxième dispositif de contrôle électronique 26 peut intégrer un commutateur électronique 33 par exemple sur silicium apte à commander l'émission du signal de sortie 29 préalablement généré par un module de régulation 34 intégré dans le deuxième dispositif de contrôle électronique 26. Ce signal 29 est généré par le module de régulation 34 de façon à piloter l'allumage des feux 22 en assurant une régulation de la tension électrique à leurs bornes, cette régulation étant fonction de l'ordre d'allumage 28 acquis par un module d'acquisition 35 et finalement de la sollicitation sur la pédale 25.

Le module d'acquisition 35 et/ou le commutateur électronique 33 du deuxième dispositif de contrôle électronique 26 réalise(nt) une acquisition d'au moins le deuxième signal d'entrée 31 provenant de la liaison redondante 32. En fonction des variantes, seul le module d'acquisition 35 ou le commutateur électronique 33 peut être affecté à l'acquisition du deuxième signal d'entrée 31.

Plus précisément, le module d'acquisition 35 peut réaliser l'acquisition de l'ordre d'allumage 28 et éventuellement du deuxième signal d'entrée 31. Le système de commande 21 peut comprendre une interface 36 homme/machine apte à alerter le conducteur du véhicule en cas d'absence d'acquisition, par le module d'acquisition 35 du deuxième dispositif de contrôle électronique 26, de l'ordre d'allumage 28 et/ou du deuxième signal d'entrée 31. L'interface 36 est aménagée par exemple à proximité du tableau de bord du véhicule.

D'autre part, le deuxième dispositif de contrôle électronique 26 peut intégrer un « chien de garde » 37 apte à se déclencher en cas d'erreur sur le processus effectué par le module d'acquisition 35, pour accomplir l'acquisition et l'émission du deuxième signal d'entrée 31 par le commutateur électronique 33.

Le chien de garde 37, encore connu sous la dénomination anglo-saxonne « watchdog », est un circuit électronique ou un logiciel utilisé dans le domaine de l'électronique numérique pour s'assurer que le dispositif de contrôle 26 ne reste pas bloqué à une étape particulière du processus qu'il exécute. Il réalise donc une protection destinée généralement à redémarrer le système, si une action définie n'est pas exécutée dans un délai imparti. Le chien de garde 37 est intégré dans le deuxième dispositif de contrôle électronique 26 et assure que le deuxième signal d'entrée 31 puisse être transmis directement aux feux 22 par l'intermédiaire du commutateur électronique 33 qui doit donc changer d'état, en cas de défaillance d'au moins l'un des modules du premier dispositif 23 et/ou du réseau 27 et/ou d'au moins l'un des modules d'acquisition 35 et de régulation 34 du deuxième dispositif 26. Il n'y a que dans ce mode dégradé que la régulation en tension électrique aux bornes des feux de stop 22 assurée en mode normal par le module de régulation 34 est interrompue.

Par contre, dans le cas d'une absence d'acquisition de l'ordre d'allumage 28 par le module 35 (signifiant une défaillance de l'un des modules du dispositif 23 et/ou du réseau 27), la réception éventuelle du deuxième signal d'entrée 31 par le module d'acquisition 35 permet un maintien de la régulation en tension électrique aux bornes des feux 22 assurée par le module 34 à partir du signal d'entrée 31 et non plus, comme en mode normal, à partir de l'ordre d'allumage 28. Il s'agit d'un mode intermédiaire entre le mode normal et le mode dégradé.

Le déclenchement du chien de garde 37 ou l'activation de l'interface 36 par le module d'acquisition 35 peut éventuellement commander en outre un allumage automatique des feux de route 43 et/ou de position 44 que peut piloter le deuxième dispositif de contrôle 26.

Pour que le premier dispositif de contrôle électronique 23 puisse également réaliser une acquisition du deuxième signal d'entrée 31 en plus de celle du premier signal 24, le système de commande 21 peut comporter, en référence à la figure 3, une connexion 38 pour transmettre le deuxième signal d'entrée 31 à un module d'acquisition 39 du premier dispositif de contrôle électronique 23. La connexion 38 et/ou la liaison redondante 32 peuvent être de type filaire sans nécessiter l'utilisation d'un bus CAN.

Le système de commande 21 peut en outre comprendre une interface apte à alerter le conducteur du véhicule en cas d'absence d'acquisition, par le module d'acquisition 39 du premier dispositif de contrôle électronique 23, du premier signal d'entrée 24 et/ou du deuxième signal d'entrée 31. Cette interface peut être commune avec l'interface 36 précédemment décrite, ou dissociée. L'absence d'acquisition du deuxième signal d'entrée 31 ainsi diagnostiquée et alertée a pour effet de révéler une défaillance dans le transfert du signal 31 le long de la liaison redondante 32 ou le long de la connexion 38.

D'autre part, le premier dispositif de contrôle 23 peut intégrer un module de traitement 40 apte à générer l'ordre d'allumage 28 en fonction du résultat qu'il reçoit en provenance du module d'acquisition 39.

Comme l'illustre la figure 4, le premier dispositif de contrôle 23 peut comporter un moyen de liaison 41 adapté pour réaliser la connexion entre le module de traitement 40 et le réseau d'informations multiplexé 27. De manière similaire, le deuxième dispositif de contrôle 26 peut comprendre un moyen de liaison 42 configuré pour accomplir la connexion entre le réseau d'informations multiplexé 27 et le module d'acquisition 35.

Enfin, la liaison électrique entre l'interface 36 et éventuellement l'interface associée au diagnostic réalisé par le module d'acquisition 39 avec les autres composants du système 21 peut exploiter des réseaux multiplexés de type bus CAN.

Le système de commande 21 de l'allumage des feux de stop 22 d'un véhicule automobile exécute donc une étape d'acquisition, par le premier dispositif de contrôle électronique 23, d'au moins un premier signal d'entrée 24 représentatif de la présence et de l'absence, éventuellement la valeur progressive, d'une sollicitation mécanique sur la pédale d'actionnement 25 d'un dispositif de freinage du véhicule. Le système 21 exécute ensuite une étape de traitement du signal d'entrée 24 par le premier dispositif de contrôle électronique 23, puis une étape d'allumage des feux de stop en fonction du signal d'entrée 24, par exemple dans le cas d'un résultat de l'étape de traitement correspondant à un signal d'entrée 24 confirmant une sollicitation ou sa valeur progressive.

Selon une caractéristique essentielle, l'étape d'allumage des feux de stop peut comprendre deux phases. Une phase de transmission est exécutée par le premier dispositif de contrôle électronique 23, pour transmettre un ordre d'allumage 28 des feux de stop 22 représentatif du premier signal d'entrée 24 à un deuxième dispositif de contrôle électronique 26 raccordé au premier par un réseau d'informations multiplexé 27. Une phase d'émission est exécutée par le deuxième dispositif de contrôle électronique 26 pour émettre un signal de sortie 29 assurant un pilotage de l'allumage des feux de stop 22 par application d'une régulation de la tension électrique appliquée à leurs bornes en fonction de l'ordre d'allumage 28.

Entre les phases de transmission de l'ordre d'allumage 28 et d'émission du signal de sortie 29, l'étape d'allumage des feux de stop 22 comprend elle aussi deux phases. Dans une phase d'acquisition, l'ordre d'allumage 28 est acquis par le deuxième dispositif de contrôle électronique 26. Puis dans une phase de génération, le signal de sortie 29 est généré par le deuxième dispositif de contrôle électronique 26 en fonction de l'ordre d'allumage 28. La phase d'émission du signal de sortie 29 généré est alors commandée par le commutateur électronique 33 intégré dans le deuxième dispositif de contrôle électronique 26.

Il peut être prévu une étape d'acquisition, par le deuxième dispositif de contrôle électronique 26, d'au moins un deuxième signal d'entrée 31 représentatif d'une sollicitation mécanique sur la pédale 25, indépendant du premier signal d'entrée 24. Cette étape peut être réalisée par le module d'acquisition 35 en même temps que la phase d'acquisition de l'ordre d'allumage 28 afin d'accomplir une étape de diagnostic pour vérifier l'acquisition conjointe du deuxième signal d'entrée 31 et de l'ordre d'allumage 28. Le conducteur du véhicule peut être alerté par le système de commande 21 dans le cas d'un résultat de l'étape de diagnostic correspondant à une absence d'acquisition du deuxième signal d'entrée 31 et/ou de l'ordre d'allumage 28. Ce diagnostic doit pouvoir tenir compte d'un éventuel retard dans un délai imparti de l'ordre 28 par rapport au signal 31, notamment en raison du fonctionnement du dispositif 23 et du réseau 27.

À titre d'exemple, l'ordre d'allumage 28 tient compte des deux signaux 24 et 31. Dans un premier temps, le signal 24 change d'état (de OFF à ON), ce qui implique un envoi d'un premier message sur le réseau multiplexé 27. En pressant la pédale encore plus fort, le signal 31 change d'état également (de ON à OFF), ce qui implique un envoi d'un deuxième message sur le réseau multiplexé 27, confirmant ainsi la commande de freinage par le conducteur. L'ordre d'allumage 28 tient compte de ces deux messages, et est comparé au signal 24 par le module 35.

Dans un mode de réalisation l'étape d'acquisition du deuxième signal d'entrée 31 par le deuxième dispositif de contrôle électronique 26 est réalisée par le commutateur électronique 33, après déclenchement du chien de garde 37 en cas d'absence d'acquisition de l'ordre d'allumage 28 par le module 35.

Il peut également être prévu une étape d'acquisition du deuxième signal d'entrée 31 par le premier dispositif de contrôle électronique 23, qui peut comporter à cet effet le module d'acquisition 39 susceptible de réaliser une étape de diagnostic pour vérifier l'acquisition conjointe des premier et deuxième signaux d'entrée 24, 31. Dans le cas d'un diagnostic négatif, le conducteur du véhicule peut être alerté au niveau d'une interface.

L'invention porte également sur un véhicule automobile équipé de feux de stop 22 et d'un système de commande 21 de l'allumage des feux 22 tel que précédemment décrit. Elle concerne également tout support d'enregistrement de données lisible par un calculateur appartenant à l'un des premier et deuxième dispositifs de contrôle électroniques 23, 26, sur lequel est enregistré un programme informatique comprenant des moyens de codes de programme informatique de mise en œuvre des phases et/ou des étapes d'un procédé précédemment décrit. Enfin, elle a trait à tout programme informatique comprenant un moyen de codes de programme informatique adapté à la réalisation des phases et/ou des étapes d'un procédé précédemment décrit, lorsque le programme tourne sur au moins un calculateur appartenant à l'un des premier et deuxième dispositifs de contrôle électroniques 23, 26.

Dans ce qui précède, il peut être entendu par « calculateur » tout moyen électronique de type automate ou microcontrôleur pouvant intégrer un programme dont l'exécution des tâches et des séquences permet de parvenir à la mise en œuvre de l'invention.

Pour finir, la régulation en tension électrique moyenne aux bornes des feux de stop 22 est concomitante avec une régulation de la puissance électrique transmise aux feux de stop 22, ce qui est intéressant pour des lampes à filaments.

## Revendications

1. Procédé de commande de l'allumage de feux de stop (22) d'un véhicule automobile, comprenant :
- une première étape d'acquisition, par un premier dispositif de contrôle électronique (23), d'un premier signal d'entrée (24) représentatif d'une sollicitation mécanique sur une pédale d'actionnement (25) d'un dispositif de freinage du véhicule,
**caractérisé en ce qu'**il comprend :
- une deuxième étape d'acquisition par un deuxième dispositif de contrôle électronique, d'un deuxième signal d'entrée (31) représentatif d'une sollicitation mécanique sur la pédale d'actionnement, indépendant du premier signal d'entrée, cette deuxième étape d'acquisition étant une étape d'acquisition directe, et
- une étape d'allumage des feux de stop qui comprend :
- une phase de transmission, par le premier dispositif de contrôle électronique, d'un ordre d'allumage (28) des feux de stop représentatif du premier signal d'entrée au deuxième dispositif de contrôle électronique (26) par un réseau d'informations multiplexé (27),
- puis une phase d'émission, par le deuxième dispositif de contrôle électronique, d'un signal de sortie (29) assurant un pilotage de l'allumage des feux de stop par une régulation de la tension ou de la puissance électrique appliquée à leurs bornes en fonction de l'ordre d'allumage et/ou en fonction du deuxième signal d'entrée obtenu avec ladite acquisition directe.

2. Procédé selon la revendication 1, **caractérisé en ce que** ladite deuxième étape d'acquisition du deuxième signal d'entrée par le deuxième dispositif de contrôle électronique et une phase d'acquisition de l'ordre d'allumage sont réalisées par un module d'acquisition (35).

3. Procédé selon la revendication 2, **caractérisé en ce que** le module d'acquisition (35) réalise une étape de diagnostic pour vérifier l'acquisition conjointe du deuxième signal d'entrée et de l'ordre d'allumage.

4. Procédé selon la revendication 3, **caractérisé en ce qu'**il comprend une étape d'alerte du conducteur du véhicule dans le cas d'un résultat de l'étape de diagnostic correspondant à une absence d'acquisition du deuxième signal d'entrée et/ou de l'ordre d'allumage.

5. Procédé selon l'une des revendications 1 à 4, **caractérisé en ce que** la phase d'émission du signal de sortie (29) est commandée par un commutateur électronique (33) intégré dans le deuxième dispositif de contrôle électronique.

6. Procédé selon la revendication 5, **caractérisé en ce que** l'étape d'acquisition du deuxième signal d'entrée par le deuxième dispositif de contrôle électronique est réalisée par ledit commutateur électronique (33), le deuxième signal d'entrée (31) pouvant être transmis directement aux feux (22) par l'intermédiaire du commutateur électronique (33).

7. Procédé selon la revendication 6, **caractérisé en ce que** l'acquisition du deuxième signal d'entrée par le commutateur électronique est commandée par un « chien de garde » (37) déclenché en cas d'erreur sur le processus exécuté par le module d'acquisition.

8. Procédé selon l'une des revendications 1 à 7, **caractérisé en ce qu'**il comprend une étape d'acquisition du deuxième signal d'entrée par le premier dispositif de contrôle électronique.

9. Procédé selon la revendication 8, **caractérisé en ce qu'**un module d'acquisition (39) du premier dispositif de contrôle électronique réalise une étape de diagnostic pour vérifier l'acquisition conjointe des premier et deuxième signaux d'entrée (24, 31).

10. Système de commande (21) de l'allumage de feux de stop (22) d'un véhicule automobile, comprenant un premier dispositif de contrôle électronique (23), apte à réaliser l'acquisition d'un premier signal d'entrée (24) représentatif d'une sollicitation mécanique sur une pédale d'actionnement (25) d'un dispositif de freinage du véhicule, et à transmettre un ordre d'allumage (28) des feux de stop représentatif du premier signal d'entrée à un deuxième dispositif de contrôle électronique (26) par un réseau d'informations multiplexé (27), le deuxième dispositif de contrôle électronique étant apte à réaliser l'acquisition directe d'un deuxième signal d'entrée (31) représentatif d'une sollicitation mécanique sur une pédale d'actionnement, indépendant du premier signal d'entrée, et à émettre un signal de sortie (29) pilotant l'allumage des feux de stop par l'intermédiaire d'une régulation de la tension ou de la puissance électrique appliquée aux bornes des feux de stop en fonction de l'ordre d'allumage et/ou du deuxième signal d'entrée.

11. Système selon la revendication 10, **caractérisé en ce que** le deuxième dispositif de contrôle électronique intègre un commutateur électronique (33) apte à commander l'émission du signal de sortie préalablement généré par un module de régulation (34) du deuxième dispositif de contrôle électronique en fonction de l'ordre d'allumage acquis par un module d'acquisition (35) du deuxième dispositif de contrôle électronique.

12. Système selon la revendication 11, **caractérisé en ce que** le module d'acquisition et/ou le commutateur électronique du deuxième dispositif de contrôle électronique réalise(nt) l'acquisition du deuxième signal d'entrée (31) représentatif d'une sollicitation mécanique sur la pédale d'actionnement.

13. Système selon la revendication 12, **caractérisé en ce qu'**il comprend une interface (36) apte à alerter le conducteur du véhicule en cas d'absence d'acquisition, par le module d'acquisition du deuxième dispositif de contrôle électronique, de l'ordre d'allumage et/ou du deuxième signal d'entrée.

14. Système selon l'une des revendications 12 et 13, **caractérisé en ce que** le deuxième dispositif de contrôle électronique intègre un « chien de garde » (37) apte à se déclencher en cas d'erreur sur le processus effectué par le module d'acquisition (35), pour accomplir l'acquisition et l'émission du deuxième signal d'entrée (31) par le commutateur électronique (33).

15. Système selon l'une des revendications 12 à 14, **caractérisé en ce qu'**il comporte une connexion (38) pour transmettre le deuxième signal d'entrée à un module d'acquisition (39) du premier dispositif de contrôle électronique.

16. Véhicule automobile équipé de feux de stop et d'un système de commande (21) de l'allumage des feux (22) selon l'une des revendications 10 à 15.

## Patentansprüche

1. Verfahren zur Steuerung des Einschaltens von Bremsleuchten (22) eines Kraftfahrzeugs, umfassend:
- einen ersten Schritt des Erfassens, durch eine erste elektronische Steuerungsvorrichtung (23) eines ersten Eingangssignals (24), das für eine mechanische Belastung auf einem Betätigungspedal (25) einer Bremsvorrichtung des Fahrzeugs repräsentativ ist,
**dadurch gekennzeichnet, dass** es Folgendes umfasst:
- einen zweiten Schritt des Erfassens, durch eine zweite elektronische Steuerungsvorrichtung, eines zweiten Eingangssignals (31), das für eine mechanische Belastung auf dem Betätigungspedal repräsentativ ist, das von dem ersten Eingangssignal unabhängig ist, wobei dieser zweite Schritt des Erfassens ein Schritt des direkten Erfassens ist, und
- einen Schritt des Einschaltens der Bremsleuchten, der Folgendes umfasst:
- eine Phase des Übertragens, durch die erste elektronische Steuerungsvorrichtung, eines Befehls zum Einschalten (28) der Bremsleuchten, der für das erste Eingangssignal repräsentativ ist, an die zweite elektronische Steuerungsvorrichtung (26) durch ein multiplexiertes Informationsnetzwerk (27),
- dann eine Phase des Sendens, durch die zweite elektronische Steuerungsvorrichtung, eines Ausgangssignals (29), das eine Steuerung des Einschaltens der Bremsleuchten durch eine Regelung der elektrischen Spannung oder Leistung sicherstellt, die an ihren Anschlüssen angelegt ist, in Abhängigkeit von dem Einschaltbefehl und/oder in Abhängigkeit von dem zweiten Eingangssignal, das mit der direkten Erfassung erhalten wurde.

2. Verfahren nach Anspruch 1, **dadurch gekennzeichnet, dass** der zweite Schritt des Erfassens des zweiten Eingangssignals durch die zweite elektronische Steuerungsvorrichtung und eine Phase des Erfassens des Einschaltbefehls von einem Erfassungsmodul (35) vorgenommen werden.

3. Verfahren nach Anspruch 2, **dadurch gekennzeichnet, dass** das Erfassungsmodul (35) einen Diagnoseschritt vornimmt, um die gemeinsame Erfassung des zweiten Eingangssignals und des Einschaltbefehls zu überprüfen.

4. Verfahren nach Anspruch 3, **dadurch gekennzeichnet, dass** es einen Schritt des Warnens des Fahrers des Fahrzeugs, falls ein Ergebnis des Diagnoseschritts einer Nichterfassung des zweiten Eingangssignals und/oder des Einschaltbefehls entspricht, umfasst.

5. Verfahren nach einem der Ansprüche 1 bis 4, **dadurch gekennzeichnet, dass** die Phase des Sendens des Ausgangssignals (29) durch einen elektronischen Schalter (33) gesteuert wird, der in der zweiten elektronischen Steuerungsvorrichtung integriert ist.

6. Verfahren nach Anspruch 5, **dadurch gekennzeichnet, dass** der Schritt des Erfassens des zweiten Eingangssignals durch die zweite elektronische Steuerungsvorrichtung von dem elektronischen Schalter (33) vorgenommen wird, wobei das zweite Eingangssignal (31) mittels des elektronischen Schalters (33) direkt an die Leuchten (22) übertragen werden kann.

7. Verfahren nach Anspruch 6, **dadurch gekennzeichnet, dass** die Erfassung des zweiten Eingangssignals durch den elektronischen Schalter durch einen "Wachhund" (37) gesteuert wird, der bei einem Fehler in dem Prozess, der durch das Erfassungsmodul ausgeführt wird, ausgelöst wird.

8. Verfahren nach einem der Ansprüche 1 bis 7, **dadurch gekennzeichnet, dass** es einen Schritt des Erfassens des zweiten Eingangssignals durch die erste elektronische Steuerungsvorrichtung umfasst.

9. Verfahren nach Anspruch 8, **dadurch gekennzeichnet, dass** ein Erfassungsmodul (39) der ersten elektronischen Steuerungsvorrichtung einen Diagnoseschritt vornimmt, um die gemeinsame Erfassung des ersten und zweiten Eingangssignals (24, 31) zu überprüfen.

10. System zur Steuerung (21) des Einschaltens von Bremsleuchten (22) eines Kraftfahrzeugs, umfassend eine erste elektronische Steuerungsvorrichtung (23), die geeignet ist, die Erfassung eines ersten Eingangssignals (24) vorzunehmen, das für eine mechanische Belastung auf einem Betätigungspedal (25) einer Bremsvorrichtung des Fahrzeugs repräsentativ ist, und einen Befehl zum Einschalten (28) der Bremsleuchten, der für das erste Eingangssignal repräsentativ ist, an eine zweite elektronische Steuerungsvorrichtung (26) durch ein multiplexiertes Informationsnetzwerk (27) zu übertragen, wobei die zweite elektronische Steuerungsvorrichtung geeignet ist, die direkte Erfassung eines zweiten Eingangssignals (31) vorzunehmen, das für eine mechanische Belastung auf einem Betätigungspedal repräsentativ ist, das von dem ersten Eingangssignal unabhängig ist, und ein Ausgangssignal (29) zu senden, das das Einschalten der Bremsleuchten mittels einer Regelung der elektrischen Spannung oder Leistung steuert, die an den Anschlüssen der Bremsleuchten angelegt ist, in Abhängigkeit von dem Einschaltbefehl und/oder dem zweiten Eingangssignal.

11. System nach Anspruch 10, **dadurch gekennzeichnet, dass** die zweite elektronische Steuerungsvorrichtung einen elektronischen Schalter (33) enthält, der geeignet ist, die Sendung des Ausgangssignals, das zuvor durch das Regelungsmodul (34) der zweiten elektronischen Steuerungsvorrichtung erzeugt wurde, in Abhängigkeit von dem Einschaltbefehl zu steuern, der durch ein Erfassungsmodul (35) der zweiten elektronischen Steuerungsvorrichtung erfasst wird.

12. System nach Anspruch 11, **dadurch gekennzeichnet, dass** das Erfassungsmodul und/oder der elektronische Schalter der zweiten elektronischen Steuerungsvorrichtung die Erfassung des zweiten Eingangssignals (31) vornimmt/vornehmen, das für eine mechanische Belastung auf dem Betätigungspedal repräsentativ ist.

13. System nach Anspruch 12, **dadurch gekennzeichnet, dass** es eine Schnittstelle (36) umfasst, die geeignet ist, den Fahrer des Fahrzeugs bei Nichterfassung, durch das Erfassungsmodul der zweiten elektronischen Steuerungsvorrichtung, des Einschaltbefehls und/oder des zweiten Eingangssignals zu warnen.

14. System nach einem der Ansprüche 12 und 13, **dadurch gekennzeichnet, dass** die zweite elektronische Steuerungsvorrichtung einen "Wachhund" (37) enthält, der geeignet ist, bei einem Fehler in dem Prozess, der durch das Erfassungsmodul (35) ausgeführt wird, ausgelöst zu werden, um die Erfassung und Sendung des zweiten Eingangssignals (31) durch den elektronischen Schalter (33) auszuführen.

15. System nach einem der Ansprüche 12 bis 14, **dadurch gekennzeichnet, dass** es eine Verbindung (38) aufweist, um das zweite Eingangssignal an ein Erfassungsmodul (39) der ersten elektronischen Steuerungsvorrichtung zu übertragen.

16. Kraftfahrzeug, das mit Bremsleuchten und einem System (21) zur Steuerung des Einschaltens der Leuchten (22) nach einem der Ansprüche 10 bis 15 ausgerüstet ist.

## Claims

1. Method of controlling the ignition of stop lights (22) of an automotive vehicle, comprising:
- a first step of acquisition, by a first electronic control device (23), of a first input signal (24) representative of a mechanical loading on a pedal (25) for actuating a device for braking the vehicle,
**characterized in that** it comprises:
- a second step of acquisition, by a second electronic control device, of a second input signal (31) representative of a mechanical loading on the actuation pedal, independent of the first input signal, this second acquisition step being a direct acquisition step, and
- a step of ignition of the stop lights which comprises:
- a phase of transmission, by the first electronic control device, of an order of ignition (28) of the stop lights which is representative of the first input signal to the second electronic control device (26) by a multiplexed information network (27),
- and then a phase of emission, by the second electronic control device, of an output signal (29) ensuring command of the ignition of the stop lights by regulation of the electrical voltage or power applied to their terminals as a function of the order of ignition and/or as a function of the second input signal obtained with said direct acquisition.

2. Method according to Claim 1, **characterized in that** said second step of acquisition of the second input signal by the second electronic control device and a phase of acquisition of the order of ignition are carried out by an acquisition module (35).

3. Method according to Claim 2, **characterized in that** the acquisition module (35) carries out a diagnosis step to verify the joint acquisition of the second input signal and of the order of ignition.

4. Method according to Claim 3, **characterized in that** it comprises a step of alerting the driver of the vehicle in the case of a result of the diagnosis step corresponding to an absence of acquisition of the second input signal and/or of the order of ignition.

5. Method according to one of Claims 1 to 4, **characterized in that** the emission phase of the output signal (29) is controlled by an electronic switch (33) integrated into the second electronic control device.

6. Method according to Claim 5, **characterized in that** the step of acquisition of the second input signal by the second electronic control device is carried out by said electronic switch (33), the second input signal (31) being able to be transmitted directly to the lights (22) by way of the electronic switch (33).

7. Method according to Claim 6, **characterized in that** the acquisition of the second input signal by the electronic switch is controlled by a "watchdog" (37) triggered in the case of error in the process executed by the acquisition module.

8. Method according to one of Claims 1 to 7, **characterized in that** it comprises a step of acquisition of the second input signal by the first electronic control device.

9. Method according to Claim 8, **characterized in that** an acquisition module (39) of the first electronic control device carries out a diagnosis step to verify the joint acquisition of the first and second input signals (24, 31).

10. System (21) for controlling the ignition of stop lights (22) of an automotive vehicle, comprising a first electronic control device (23), able to carry out the acquisition of a first input signal (24) representative of a mechanical loading on a pedal (25) for actuating a device for braking the vehicle, and to transmit an order of ignition (28) of the stop lights which is representative of the first input signal to a second electronic control device (26) by a multiplexed information network (27), the second electronic control device being able to carry out the direct acquisition of a second input signal (31) representative of a mechanical loading on an actuation pedal, independent of the first input signal, and to emit an output signal (29) commanding the ignition of the stop lights by way of regulation of the electrical voltage or power applied to the terminals of the stop lights as a function of the order of ignition.

11. System according to Claim 10, **characterized in that** the second electronic control device integrates an electronic switch (33) able to control the emission of the output signal previously generated by a regulation module (34) of the second electronic control device as a function of the order of ignition acquired by an acquisition module (35) of the second electronic control device.

12. System according to Claim 11, **characterized in that** the acquisition module and/or the electronic switch of the second electronic control device carries out (carry out) the acquisition of the second input signal (31) representative of a mechanical loading on the actuation pedal.

13. System according to Claim 12, **characterized in that** it comprises an interface (36) able to alert the driver of the vehicle in the case of absence of acquisition, by the acquisition module of the second electronic control device, of the order of ignition and/or of the second input signal.

14. System according to either of Claims 12 and 13, **characterized in that** the second electronic control device integrates a "watchdog" (37) able to be triggered in the case of error in the process performed by the acquisition module (35), so as to accomplish the acquisition and the emission of the second input signal (31) by the electronic switch (33).

15. System according to one of Claims 12 to 14, **characterized in that** it comprises a connection (38) for transmitting the second input signal to an acquisition module (39) of the first electronic control device.

16. Automotive vehicle equipped with stop lights and with a system (21) for controlling the ignition of the lights (22) according to one of Claims 10 to 15.
